# EUROPEAN PATENT APPLICATION

(11) **EP 2 897 039 A1**
(43) Date of publication of application: **22.07.2015**
(21) Application number: 15151461.9
(22) Date of filing: 16.01.2015
(51) Int. Cl.: G06F 3/0488, G06F 3/0482, G06F 3/0485

(54) **Method and apparatus for displaying a screen on an electronic device**

(30) Priority: 16.01.2014 KR 20140005418
(71) Applicant: Samsung Electronics Co., Ltd, Gyeonggi-do 443-742 (KR)
(72) Inventor: Park, Chuneon, 443-742 Gyeonggi-do (KR); Choi, Jinhee, 443-742 Gyeonggi-do (KR); Kim, Duil, 443-742 Gyeonggi-do (KR); Jeong, Seokjae, 443-742 Gyeonggi-do (KR)
(74) Representative: Birchenough, Lewis

(57) **Abstract**

A method and an electronic device for a user-friendly, intuitive and enhanced display of a screen are provided. The screen display method in an electronic device includes displaying an item list containing at least one item on a display unit, receiving a first input for scrolling the displayed item list, and displaying the at least one item of the item list in a changed size in response to the first input.

## Description

### TECHNICAL FIELD

The present disclosure relates to display technology for electronic devices. More particularly, the present disclosure relates to a method and apparatus for a user-friendly, intuitive and enhanced display of a screen on a mobile electronic device.

### BACKGROUND

Current electronic devices, such as smart phones, multimedia players, or any other mobile or portable devices provide a user interface (UI) to allow human-machine interactions. A need for a more user-friendly, a more intuitive, and a more attractive UI has grown.

Currently, a touch screen that inherently involves both input and output functions has become increasingly popular in various electronic devices. A scrollable UI control is common in a UI scheme suitable for a touch screen. However, the UI scheme based on a drag input on the screen merely allows a simple manipulation of items without variations in a size or a shape of items.

Therefore, more enhanced technique to display a screen through UI and user experience (UX) offered to users is required.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for a user-friendly, intuitive and enhanced display of a screen on electronic devices.

In accordance with an aspect of this disclosure, a screen display method in an electronic device is provided. The screen display method includes displaying an item list containing at least one item on a display unit, receiving a first input for scrolling the displayed item list, and displaying the at least one item of the item list in a changed size in response to the first input.

In accordance with another embodiment of this disclosure, an electronic device is provided. The electronic device includes a display unit configured to display an item list containing at least one item, an input unit configured to receive a first input for scrolling the displayed item list, and a control unit configured to control the display unit to display the at least one item of the item list in a changed size in response to the first input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to an embodiment of the present disclosure.
FIG. 2 is a front perspective view of an electronic device according to an embodiment of the present disclosure.
FIG. 3 is a rear perspective view of an electronic according to an embodiment of the present disclosure.
FIG. 4 is a flow diagram illustrating an operation according to an embodiment of the present disclosure.
FIGS. 5A, 5B, and 5C are schematic views illustrating a screen display method according to an embodiment of the present disclosure.
FIGS. 6A, 6B, and 6C are schematic views illustrating a screen display method according to another embodiment of the present disclosure.
FIGS. 7A and 7B are schematic views illustrating a screen display method according to still another embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a", "an", and "the" include plural referents unless the context clearly dictates otherwise. Thus, for example, reference to "a component surface" includes reference to one or more of such surfaces.

"Or" means "and/or". As used herein, the term "and/or" includes any and all combinations of one or more of the associated listed items. It will be further understood that the terms "comprises" and/or "comprising", or "includes" and/or "including" when used in this specification, specify the presence of stated features, regions, integers, operations, elements, and/or components, but do not preclude the presence or addition of one or more other features, regions, integers, operations, elements, components, and/or groups thereof.

It will be understood that, although the terms "first", "second", "third", and the like, may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element", "component", "region", "layer" or "section" discussed below could be termed a second element, component, region, layer or section without departing from the teachings herein.

The above-discussed method is described herein with reference to flowchart illustrations of user interfaces, methods, and computer program products according to various embodiments of the present disclosure. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "unit" or "module", as used herein, may refer to a software or hardware component or device which performs certain tasks. A unit or module may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

In this disclosure, an electronic device includes mobile or portable electronic devices such as a mobile phone, a smart phone, a tablet Personal Computer (PC), a laptop PC, a Personal Digital Assistant (PDA), a navigation device, a digital broadcasting receiver, a Portable Multimedia Player (PMP), and the like. As well understood by those skilled in the art, the above-mentioned electronic devices are exemplary only and not to be considered as a limitation of this disclosure.

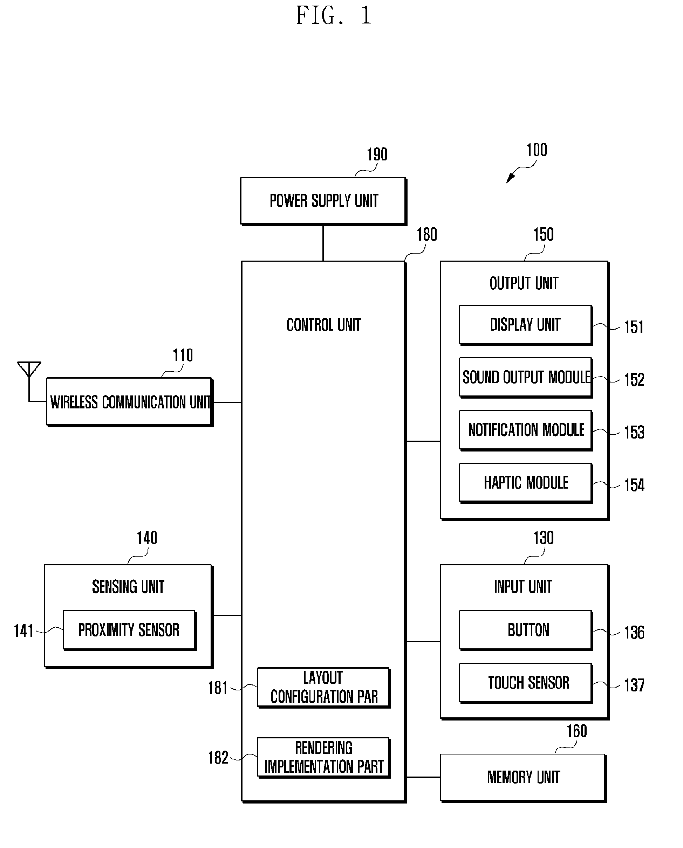

FIG. 1 is a block diagram of an electronic device according to an embodiment of the present disclosure.

Referring to FIG. 1, a device 100 which is also referred to as a terminal may include a wireless communication unit 110, an input unit 130, a sensing unit 140, an output unit 150, a memory unit 160, a control unit 180, and a power supply unit 190, but is not limited thereto. Although not illustrated in FIG. 1, the 100 may further include any other elements for providing essential or optional functions. If necessary, some of the above elements of the device 100 may be omitted or replaced with another. In addition, the device 100 may operate to control any other electronic device physically connected or electrically coupled thereto. For example, the control unit 180 of the device 100 may be configured to control a user interface displayed on a display unit of any external device.

Now, the above elements will be described in detail.

The wireless communication unit 110 may include at least one module capable of a wireless communication between the device 100 and a communication system or between the device 100 and a network in which the device 100 is located.

The wireless communication unit 110 transmits or receives a signal to or from at least one of a base station, an external device, a server, and any other entity on a mobile communication network such as, for example, Global System for Mobile communication (GSM), Code Division Multiple Access (CDMA), or Wideband CDMA (WCDMA). This signal may include a voice call signal, a video call signal, or various forms of data associated with text or multimedia message.

In various embodiments, the wireless communication unit 110 may refer to a module for a wireless internet access and be embedded in or connected to the device 100. As wireless internet technology, Wireless Local Access Network (WLAN) or Wireless Fidelity (Wi-Fi), Wireless broadband (Wibro), World interoperability for microwave access (Wimax), High Speed Downlink Packet Access (HSDPA), GSM, CDMA, WCDMA, Long Term Evolution (LTE), and the like.

In various embodiments, it may be appreciated that a wireless internet access using Wibro, HSDPA, GSM, CDMA, WCDMA, LTE, and the like is performed through a mobile communication network.

The input unit 130 creates input data for controlling the operation of the device 100, based on a user's manipulating action or gesture. The input unit 130 may be formed of a button 136 disposed at front, rear and/or lateral side(s) of the device 100, and a touch sensor 137. Although not shown, a keypad, a dome switch, a jog wheel, a jog switch, and the like, may be further formed.

The sensing unit 140 senses a current status of the device 100 such as an opened or closed state of the device 100, a location of the device 100, a user's contact, an orientation of the device 100, an acceleration or deceleration of the device 100, and the like and thereby creates a sensing signal for controlling the operation of the device 100. In case the device 100 is a slide phone for example, the sensing unit 140 may sense whether the slide phone is opened or not. Also, the sensing unit 140 may sense whether the power supply unit 190 supplies electric power. Meanwhile, the sensing unit 140 may include therein a proximity sensor 141, which will be described below.

The output unit 150 creates a visual, audible or tactile output and may include therein a display unit 151, a sound output module 152, a notification module 153, a haptic module 154, and the like.

The display unit 151 displays thereon any information processed or to be processed by the device 100. In case the device 100 is in a call mode for example, the display unit 151 displays a User Interface (UI) or Graphic UI (GUI) associated with a call. In case the device 100 is in a video call mode or a camera mode, the display unit 151 displays a captured and/or received image or a suitable UI or GUI.

The display unit 151 may be formed of Liquid Crystal Display (LCD), Thin Film Transistor LCD (TFT LCD), Organic Light Emitting Diode (OLED), flexible display, three-dimensional display, or any equivalent.

The display unit 151 may be often formed of a transparent type or a light transmission type. As an example of transparent display, Transparent OLED (TOLED) is well known. Also, the display unit 151 may have a rear structure of light transmission type. This structure allows a user to see anything located behind the device 100 through the display unit 151.

In various embodiments, the device 100 may have two or more display units 151. For example, a plurality of display units may be disposed separately or in combination at the same side or disposed respectively at different sides.

The display unit 151 and the touch sensor 137 may form a layered structure or an integrated structure (hereinafter, referred to as a touch screen) so as to be used as an input device as well as an output device. For example, the touch sensor 137 having the form of a touch film, a touch sheet, a touch pad, and the like, may be stacked on the display unit 151 to form a layered structure or alternatively embedded in the display unit 151 to form an integrated structure.

The touch sensor 137 may be configured to convert a pressure applied to a specific point on the display unit 151 or a variation of capacitance generated at a specific point of the display unit 151 into an electric input signal. Additionally, the touch sensor 137 may be configured to detect touch position, area, and pressure.

When there is a touch input on the touch sensor 137, a corresponding signal is transmitted to a touch controller (not shown). Then the touch controller processes the received signal and transmits corresponding data to the control unit 180. Therefore, the control unit 180 may know which point is touched on the display unit 151.

The proximity sensor 141 may be disposed in an internal area of the device 100 covered with the touch screen or near the touch screen. The proximity sensor 141 refers to a sensor for detecting, by using electromagnetic force or infrared rays without mechanical contact, an object that approaches a detection surface or exists nearby. The proximity sensor 141 has longer lifespan and higher availability than contact-type sensors.

Known as examples of the proximity sensor are a transmission type photoelectric sensor, a direct reflection type photoelectric sensor, a mirror reflection type photoelectric sensor, a high-frequency oscillation type proximity sensor, a capacitive proximity sensor, a magnetic proximity sensor, an infrared proximity sensor, and the like. A capacitive touch screen is configured to detect the approach of a pointer by means of a variation in electric field caused by an approaching pointer. In this case, the touch screen (or touch sensor) may be considered as the proximity sensor.

Hereinafter, an act of a pointer approaching the touch screen without a real contact with the touch screen will be referred to as a proximity touch, and an act of a pointer actually touched on the touch screen will be referred to as a contact touch. The location of a proximity touch on the touch screen may indicate the location of the foot, residing on the touch screen, of the perpendicular starting from an approaching pointer.

The proximity sensor 141 senses a proximity touch and pattern thereof (e.g., distance, direction, speed, time, position, moving state, and the like, of a proximity touch). Information corresponding to the sensed proximity touch and pattern may be outputted on the touch screen.

The sound output module 152 may output audio data received from the wireless communication unit 110 or stored in the memory unit 160 in a call mode, a voice recording mode, a voice recognition mode, a broadcast receiving mode, and the like. The sound output module 152 may also output sound signals associated with a function (e.g., incoming call ringtone, received message sound, and the like) performed in the device 100. The sound output module 152 may include a receiver, a speaker, a buzzer, and the like.

The notification module 153 outputs a signal for indicating the occurrence of a predefined event in the device 100. Such events may be an incoming call reception, a message reception, a key signal input, a touch input, and the like. The notification module 153 may output such a signal in some forms, for example, vibration, other than a video or audio form. Since a video or audio signal may be outputted through the display unit 151 or the sound output module 152, the display unit 151 and the sound output module 152 may be considered as a kind of the notification module 153.

The haptic module 154 creates various tactile effects which are perceptible to users. A vibration is a representative example of tactile effects. The strength, pattern, and the like, of vibration generated by the haptic module 154 may be controlled. For example, different vibrations may be outputted in combination or sequentially.

The haptic module 154 may generate various tactile effects as well as a vibration, such as a vertical movement of arranged pins with regard to a user skin, a jet or suction force of air through an outlet or inlet port, a grazing act along a user skin, an electrode contact, an electrostatic force, a cold or warm feeling from an endothermic or exothermic device, and the like.

The haptic module 154 may not only transfer tactile effects through a direct contact, but also allow a user to feel tactile effects through muscular sensation of a finger, arm, and the like. According to various embodiments, there are two or more haptic modules 154 may be equipped in the device 100.

The memory unit 160 may store therein programs used by the control unit 180 and also temporarily store input/output data (e.g., phonebook, message, audio, still image, moving image, and the like). The memory unit 160 may store used frequencies of respective data (e.g., phone number, message, multimedia, and the like).

Additionally, the memory unit 160 may store data about various vibration patterns and sounds to be outputted in response to a touch input on the touch screen. Also, the memory unit 160 may store part or all of use information by a user.

The memory unit 160 may include one or more storage media selected from a flash memory, a hard disk, a multimedia card, an other card-type memory (e.g., a Secure Digital (SD) or extreme Digital (XD) memory), a Random Access Memory (RAM), a Static RAM (SRAM), a Read Only Memory (ROM), a Programmable ROM (PROM), an Electrically Erasable PROM (EEPROM), a magnetic memory, a magnetic disk, an optical disk, and the like. The device 100 may operate in connection with a web storage that performs a storage function of the memory unit 160 on the internet.

The control unit 180 controls the whole operation of the device 100. For example, the control unit 180 performs controlling and processing associated with a voice call, a data communication, a video call, and the like. In various embodiments, the control unit 180 may include at least one of a layout configuration part 181 and a rendering implementation part 182.

In various embodiments, the control unit 180 may create UI displayed on the display unit 151. In response to a user's input entered through the input unit 130, the control unit 180 may display corresponding variations of UI. Specifically, the control unit 180 may construct and process an item to be displayed on the display unit 151 and data to be used for scroll of the displayed item.

In various embodiments, the layout configuration part 181 may configure the layout of an item to be displayed on the display unit 151. Additionally, the layout configuration part 181 may configure a screen to be displayed on the display unit 151 and arrange required UI controls such that a user UI may be displayed on the screen. Such UI controls may include at least one of the position of a scroll, the size of a scroll, the size of list items within a scroll, and the configuration of list items.

In various embodiments, the rendering implementation part 182 may perform a rendering task for outputting such UI controls onto the screen of the display unit 151. The rendering implementation part 182 may further perform a task for converting an outward appearance of each UI control, based on conversion information about UI controls. This conversion includes a rotation, a scaling, a movement, and a geometric change in appearance.

In various embodiments, in response to a user's input, the rendering implementation part 182 may enlarge or reduce (i.e., zoom in or out) an item or list thereof displayed on the screen. Specifically, in response to a scroll input for a displayed item list, the rendering implementation part 182 may enlarge or reduce the item list gradually around a corresponding input point (i.e., coordinates of the scroll input).

Further, the control unit 180 may perform a pattern recognition process for recognizing text and image from a handwriting or painting input on the touch screen.

The power supply unit 190 supplies electric power required for the operation of respective elements from an internal or external power source under the control of the control unit 180. The power supply unit 190 may include, for example, a battery, a connection port, a power supply controller, and a charge monitoring part.

The battery may be a rechargeable battery and attached, in a detachable form, into a device body. The connection port may offer an interface between the battery and an external charger for supplying electric power.

Various embodiments disclosed herein may be implemented using software, hardware or combination thereof in a machine-readable recording medium.

In case of hardware implementation, various embodiments disclosed herein may be implemented using at least one of Application Specific Integrated Circuits (ASICs), Digital Signal Processors (DSPs), DSP Devices (DSPDs), Programmable Logic Devices (PLDs), Field Programmable Gate Arrays (FPGAs), processors, controllers, microcontrollers, microprocessors, and any other electronic unit. In some cases, such embodiments may be implemented in the control unit 180 per se.

In case of software implementation, various embodiments such as procedures or functions disclosed herein may be implemented by means of separate software modules, each of which may perform one or more functions and operations discussed herein. A software code may be realized by a software application written with a suitable program language. Such a software code may be stored in the memory unit 160 and executed by the control unit 180.

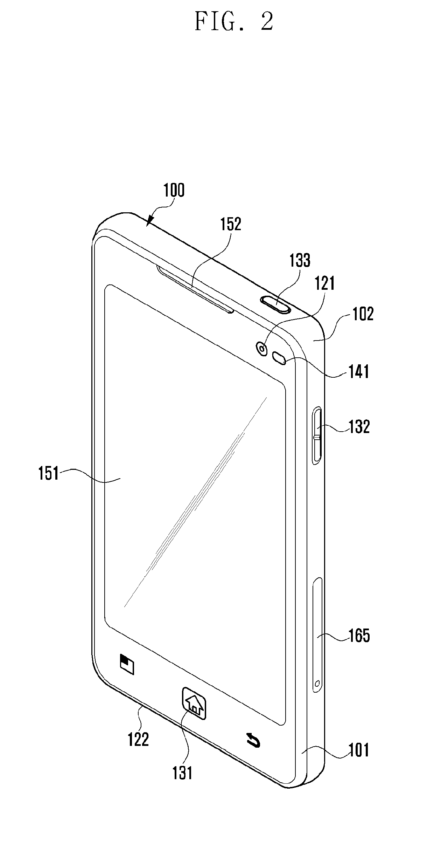

FIG. 2 is a front perspective view of an electronic device according to an embodiment of the present disclosure.

Referring to FIG. 2, the device 100 has a bar-shaped device body. This is, however, exemplary only and not to be considered as a limitation. Alternatively, the device body may have various structures such as a slide type, a folder type, a swing type, or a swivel type.

The device body includes separate cases 101 and 102. In this embodiment, these cases may refer to a front case 101 and a rear case 102. Various electronic components are embedded in a space between the front and rear cases 101 and 102.

This case may have an opening part through which a detachable auxiliary storage medium 165 such as a USIM card or a memory card may be inserted in the case. Namely, a lateral side of the case may have a slot to allow the auxiliary storage medium 165 to be inserted laterally into the device 100, or the rear case 102 may have a card slot for allowing a surface mounting. The cases 101 and 102 may be formed by an injection molding of synthetic resin or formed of metal, for example, stainless steel (STS), titanium (Ti), and the like.

Disposed on the device cases 101 and 102 may be the display unit 151, the sound output module 152, a camera 121, manipulating units 131, 132 and 133 of the user input unit 130, a microphone 122, an interface 170, and the like.

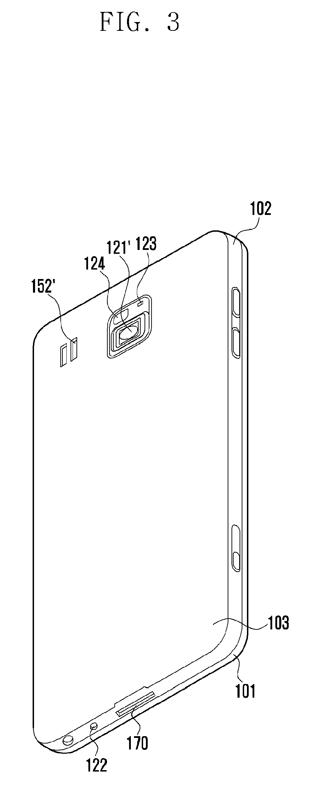

The display unit 151 occupies most parts of the front case 101. The sound output module 152 and the camera 121 are disposed near one short end of the display unit 151, and the user input unit 131 and the microphone 122 (See FIG. 3) are disposed near the other short end. The user input unit 132, the interface 170, and the like may be disposed on lateral sides of the front and rear cases 101 and 102.

The input unit 130 is configured to receive commands for controlling the operation of the device 100 and may have a plurality of manipulating units 131, 132 and 133. These units 131, 132 and 133 may also be referred to as manipulating portions.

The first, second and third manipulating units 131, 132 and 133 may be linked to various commands, respectively. For example, the first manipulating unit 131 may receive input commands such as a start, an end, or a scroll, the second manipulating unit 132 may receive input commands such as adjusting a volume of sound outputted from the sound output module 152, and the third manipulating unit 133 may receive input commands such as activation/inactivation of a touch recognition mode of the display unit 151.

Each of the manipulating units 131, 132 and 133 may be formed of a button type for recognizing a user's press, or alternatively may have a touch sensor like the display unit 151 to receive a user's input command through a user's touch only.

FIG. 3 is a rear perspective view of an electronic device according to an embodiment of the present disclosure.

Referring to FIG. 3, an additional camera 121' may be mounted on the rear side of the device 100, i.e., on the rear case 102. The additional camera or rear camera 121' may have a shooting direction opposite to that of the front camera 121 shown in FIG. 2. Also, the rear camera 121' may have pixels equal to or different from those of the front camera 121.

For example, the front camera 121 may have lower pixels for immediate and reliable transmission of a user's image in case of a video call and the like, whereas the rear camera 121' may have higher pixels suitable for capturing a photo without requiring immediate transmission. Occasionally, these cameras 121 and 121' may be installed to allow a rotation or pop-up on the device body.

A flash 123 and a mirror 124 may be further disposed near the rear camera 121'. The flash 123 emits light toward a subject when taking a picture of the subject. The mirror 124 may be used to form a user's image in a self camera mode using the rear camera 121'.

An additional or rear sound output module 152' may be disposed on the rear side of the device body. This rear sound output module 152' may offer a stereo function together with the front sound output module 152 shown in FIG. 2, and may be used for a speaker phone mode.

On lateral sides of the device body, an antenna designed for a mobile communication may be disposed together with another antenna for receiving a broadcast signal.

Hereinafter, it is supposed that the device 100 may have at least one of elements shown in FIG. 1.

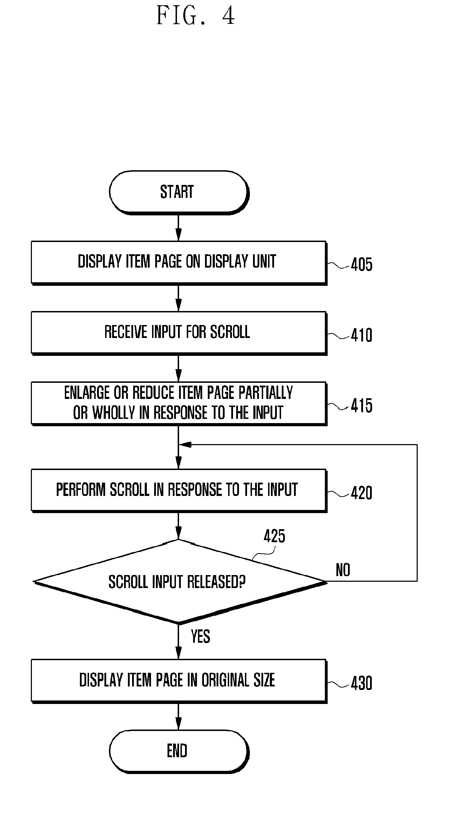

FIG. 4 is a flow diagram illustrating an operation according to an embodiment of the present disclosure.

Referring to FIG. 4, at operation 405, the device may display an item page on the display unit. According to various embodiments, this item page may be a page that contains therein one or more items or one or more item lists. Such item lists may include one or more of a webpage, a playlist, a mail list, and a thumbnail list. This is, however, exemplary only and not to be considered as a limitation. Any scrollable list or page may be used.

A scroll direction may be one or more directions. Specifically, the item page may be scrolled in one or more of both orthogonal directions and diagonal directions.

At operation 410, the device may receive an input for a scroll through the display unit. According to various embodiments, this scroll may be performed using one or more of a drag input, a fling input, a motion input, and a tablet pen. Specifically, an input for a scroll may include, but not limited to, a drag input and a fling input entered on the touch screen.

At operation 415, the device may enlarge or reduce the item page partially or wholly in response to the received scroll input. Specifically, the device may enlarge or reduce a region of the item page corresponding to coordinates of the scroll input. The size of this region of the item page may be determined on the basis of one or more of the size of the displayed item page, the size of the display unit, the kind of the scroll input, the speed of the scroll input, the size of the item page, and the kind of the item page.

According to one embodiment, a displayed page may be a playlist for indicating a plurality of music files to be played back, and the number of music files arranged in the playlist may be greater than the size of the display unit. In response to a specific scroll input, the size of items displayed at a corresponding position may be reduced or enlarged. Specifically, this scroll input may be a drag input or a fling input, and a list of items disposed near coordinates of the drag or fling input may be enlarged or reduced. A detailed description will be given below.

At operation 420, the device may perform a scroll in response to the input received at operation 410. Specifically, the enlarged or reduced item page may be scrolled in response to the scroll input. In some embodiment, the enlarged or reduced portion may be moved according to the scroll input.

At operation 425, the device may determine whether the scroll input is released. Specifically, release of the scroll input may include, but not limited to, release of a touch input for scroll. The release of the touch input may include separation of an input tool, used for a drag or fling, from the device.

If the scroll input is not released, the device may return to operation 420.

If the scroll input is released, the device may display the scrolled item page in an original size in operation 430, namely, neither enlarged nor reduced. In another embodiment, the scrolled item page may be displayed in an original size when a given time elapses after the release of the scroll input.

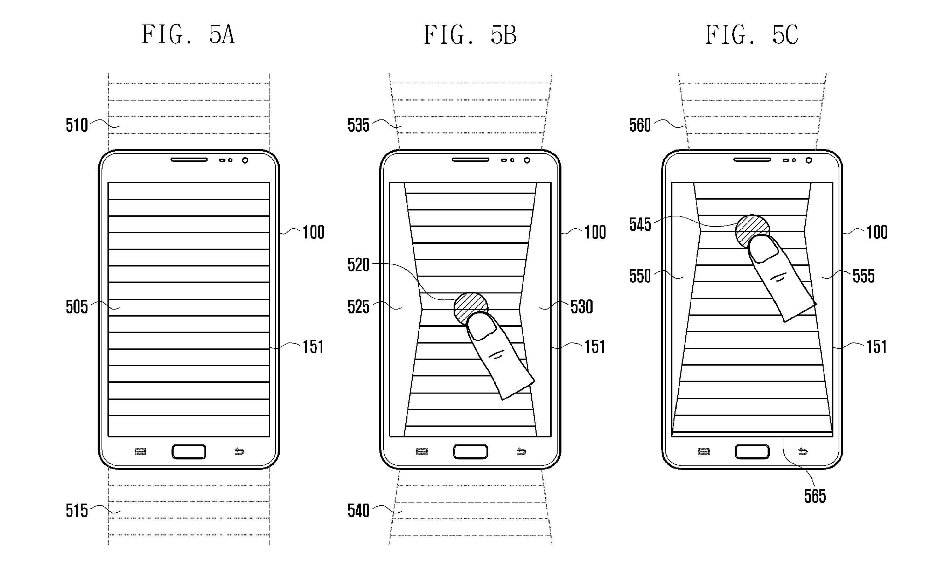

FIGS. 5A to 5C are schematic views illustrating a screen display method according to an embodiment of the present disclosure.

Referring to FIG. 5A, the device 100 may display an item page 505 on the display unit 151. In this embodiment, the item page 505 may be referred to as an item list. The item list 505 may contain one or more items and, in some embodiment, may have a form of continuously displayed page. The item list 505 may have outer portions 510 and 515 which are not displayed currently on the display unit 151 but may be displayed on the display unit 151 in response to a scroll input received by the device 100. Such outer portions 510 and 515 may have a limited size which is not limited to a specific size.

Referring to FIG. 5B, a scroll input 520 for the item list 505 shown in FIG. 5A may be received. In response to the scroll input 520, a corresponding part of the item list 505 may be displayed in a reduced size. In another embodiment, the other part of the item list 505 except the corresponding part may be reduced. This reduced part of the item list 505 may be varied according to various embodiments. In one example, the closest item from the scroll input 520 may be displayed in the smallest size, and the other items in the item list 505 may become greater gradually in size toward both ends of the item list 505. Due to a partial reduction of the item list 505, complementary regions 525 and 530 are created. These complementary regions 525 and 530 may be displayed in a blank form or semitransparently. The size of complementary regions 525 and 530 may be adjusted in proportion to a reduction ratio of the item list 505. When displayed on the display unit 151 in response to the scroll input 520, outer portions 535 and 540 of the item list may also be reduced in proportion to a distance from the scroll input 520. When the item list 505 is reduced, zoom-out effects may include one or more of accelerating, decelerating or linear animation. This will be similarly applied to release of the scroll input 520.

In various embodiments, when the scroll input 520 is received and recognized from a touch, the device 100 may display the item list 505 in a reduced size as shown and then move the reduced item list in response to a move of the scroll input 520. However, various embodiments are not limited to a touch, and the item list 505 may be displayed in a reduced size in response to any other input applied to the device 100.

Referring to FIG. 5C, the item list 505 may be displayed to move in response to a scroll input 545. A reduced position of the item list 505 may move in response to the scroll input 545. Complementary regions 550 and 555 may also move depending on a move of the reduced item list 505. In various embodiments, in response to the scroll input 545, one outer portion 540 of the item list may be entered into and displayed on the display unit 151 in a reduced size. One shorter end 565 opposite one longer end 560 of the item list 505 may be displayed on the display unit 151 so as to have the greatest width in the item list 505. In various embodiments, the greatest width of the item list 505 may correspond to the size of the display unit 151 and, in one embodiment, may be equal to the width of the display unit 151. When any upward scroll input is further received in FIG. 5C, the item list 505 may be enlarged partially in response to this scroll input, but the position and width of the shorter end 565 may remain unchanged. In various embodiments, if the scroll input 525 or 545 is released, the item list may be displayed as an original form as shown in FIG. 5A.

As discussed hereinbefore, since the item list 505 is displayed in a reduced size in response to the scroll input 520 or 545, user convenience is improved. Further, when one end 565 of the item list 505 arrives in response to the scroll input, this may be easily displayed by means of a simple user interface.

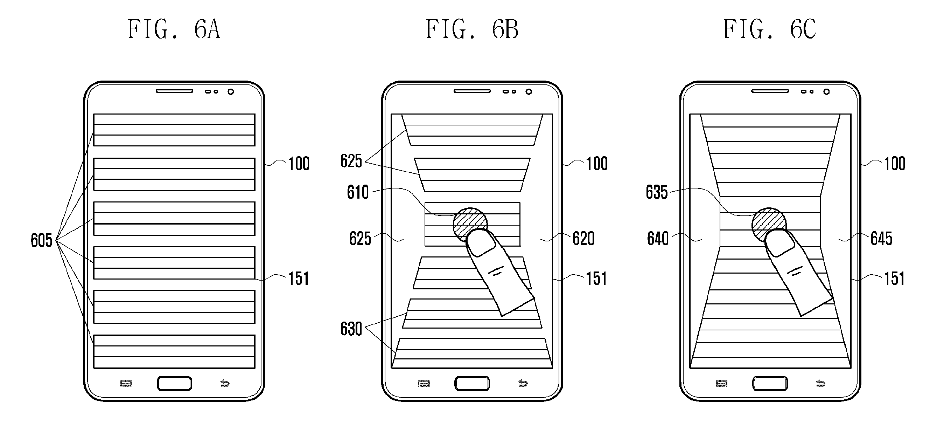

FIGS. 6A to 6C are schematic views illustrating a screen display method according to another embodiment of the present disclosure.

Referring to FIG. 6A, the device 100 may display an item list on the display unit 151. In various embodiments, the item list may contain one or more items 605. Adjacent items 605 may be separated from each other by a boundary line or a boundary region. Although not shown, outer portions of the item list may exist and will be displayed on the display unit 151 in a scroll input.

Referring to FIG. 6B, the items 605 may be displayed in a reduced size in response to a scroll input 610. In various embodiments, displaying in a reduced size may include a zoom-out effect for a specific item which is disposed at a position corresponding to the scroll input 610. In various embodiments, items 625 and 630 which are disposed near the scroll input 610 may be displayed in a gradually enlarged size as distance from the scroll input 610 increases. In various embodiments, when the item 605 is displayed in a reduced size, complementary regions 620 and 625 are created accordingly. Also, in one embodiment, if the bottom of the lower item 630 is the last item of the item list, the width of the bottom of the lower item 630 may be adjusted according to the size of the display unit 151. Specifically, the bottom width of the lower item 630 may be adjusted to fit the display unit 151, so that a user may know that a scroll arrives at the lowermost end of the item list. In various embodiments, the item having a position corresponding to the scroll input 610 may be displayed in the smallest size.

Referring to FIG. 6C, the item 605 may be displayed in a continuous form on the display unit 151 in response to a scroll input 635. Therefore, complementary regions 640 and 645 may be displayed in a corresponding form. In various embodiments, the complementary regions 640 and 645 may include one or more of a blank, an image related to the item 605, a user-defined image, and a video.

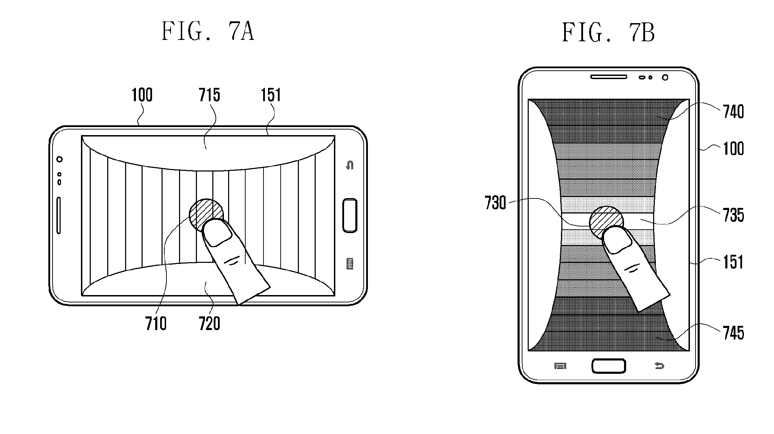

FIGS. 7A and 7B are schematic views illustrating a screen display method according to still another embodiment of the present disclosure.

Referring to FIG. 7A, an item list is displayed in a reduced size in response to a scroll input 710. This reduction may create complementary regions 715 and 720. The reduced item list may have a curved form, and a specific item disposed at a position corresponding to the scroll input 710 may be displayed in the smallest size.

Referring to FIG. 7B, in response to a scroll input 730, a specific item 735 disposed at a position corresponding to the scroll input 730 may be displayed in the smallest size, and items 740 and 745 may be displayed in a gradually enlarged size as distance from the scroll input 730 increases. In various embodiments, as distance from the scroll input 730 increases, at least one of color, brightness and chroma of the items 740 and 745 may be varied. Specifically, as further distanced from the scroll input 730, the items 740 and 745 may be displayed more darkly. Therefore, a user may easily perceive the closest item 735 from the scroll input 730. Techniques to varying at least one of color, brightness and chroma may include gradations thereof.

When the scroll input 710 or 735 is released or when a given time elapsed after such a release, the above-discussed effects may be removed and thus the item list may be displayed again in an original form.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A screen display method in an electronic device, the screen display method comprising:
displaying an item list containing at least one item on a display unit;
receiving a first input for scrolling the displayed item list; and
displaying the at least one item of the item list in a changed size in response to the first input.

2. The method of claim 1, wherein the displaying of the at least one item of the item list in the changed size includes displaying a specific item adjacent to the first input in a reduced size.

3. The method of claim 1, wherein the displaying of the at least one item of the item list in the changed size includes displaying a first item adjacent to the first input in a reduced size, and displaying a second item distanced from the first input in a greater size than that of the first item,
wherein the displaying of the at least one item of the item list in the changed size includes changing the size of the at least one item arranged in the item list such that a side line of the at least one item form a continuous straight or curved line.

4. The method of claim 1, wherein the displaying of the at least one item of the item list in the changed size includes offering zoom-out effects to the displayed at least one item, the zoom-out effects including at least one of accelerating, decelerating or linear animation.

5. The method of claim 1, wherein the displaying of the at least one item of the item list in the changed size includes changing at least one of color, brightness or chroma of the displayed at least one item so as to correspond to the changed size of the item.

6. The method of claim 1, further comprising:
when the first input is released, displaying the at least one item in an original size.

7. The method of claim 1, wherein the displaying of the at least one item of the item list in the changed size includes changing a size of the at least item of the item list such that the at least one item disposed at one of both ends of the item list has a size equal to a size of the display unit.

8. An electronic device comprising:
a display unit configured to display an item list containing at least one item;
an input unit configured to receive a first input for scrolling the displayed item list; and
a control unit configured to control the display unit to display the at least one item of the item list in a changed size in response to the first input.

9. The electronic device of claim 8, wherein the control unit is further configured to control the display unit to display a specific item adjacent to the first input in a reduced size.

10. The electronic device of claim 8, wherein the control unit is further configured to control the display unit to display a first item adjacent to the first input in a reduced size, and to display a second item distanced from the first input in a greater size than that of the first item,
wherein the control unit is further configured to change the size of the at least one item arranged in the item list such that a side line of the at least one item form a continuous straight or curved line.

11. The electronic device of claim 8, wherein the control unit is further configured to offer zoom-out effects to the displayed at least one item, the zoom-out effects including at least one of accelerating, decelerating or linear animation.

12. The electronic device of claim 8, wherein the control unit is further configured to change at least one of color, brightness or chroma of the displayed at least one item so as to correspond to the changed size of the at least one item.

13. The electronic device of claim 8, wherein the control unit is further configured to control the display unit to display the at least one item in an original size when the first input is released.

14. The electronic device of claim 8, wherein the control unit is further configured to change a size of the at least item of the item list such that the at least one item disposed at one of both ends of the item list has a size equal to a size of the display unit.
